# DEMANDE DE BREVET EUROPEEN

(11) **EP 4 840 690 A1**
(43) Date de publication de la demande: **18.11.2026**
(21) Numéro de dépôt: 26176339.5
(22) Date de dépôt: 04.05.2026
(51) Int. Cl.: B60N 2/02, B60N 2/16, B60N 2/18, F16H 1/16, F16H 1/32, F16H 37/04

(54) **MÉCANISME DE RÉGLAGE POUR SIÈGE DE VÉHICULE ET SIÈGE DE VÉHICULE COMPRENANT LE MÉCANISME DE RÉGLAGE**

(30) Priorité: 14.05.2025 FR 2505125
(71) Demandeur: Faurecia Sièges d'Automobile, 92000 Nanterre (FR)
(72) Inventeur: NAVATTE, Nicolas, 14110 CONDE NOIREAU (FR); BOURVEN, Yves, 14220 THURY-HARCOURT (FR); VAZEILLE, Nicolas, 61220 BRIOUZE (FR)
(74) Mandataire: Plasseraud IP

(57) **Abrégé**

Mécanisme de réglage (20) pour siège (1) de véhicule comportant :
un boîtier (30) comprenant un premier contre-élément de guidage (52),
un dispositif excentrique (40) monté rotatif autour d'un axe principal de rotation (A) dans le boitier (30), le dispositif excentrique (40) comprend un arbre excentrique (42),
une roue dentée orbitale (47) montée mobile en rotation sur l'arbre excentrique (42),
un dispositif de sortie (33) comprenant une couronne dentée (48) qui coopère avec la roue dentée orbitale (47),
un coulisseau (46) guidé en translation par rapport au boitier (30) suivant une première direction de coulissement (X) et en translation par rapport à la roue orbitale (47) suivant une deuxième direction de coulissement (X), le coulisseau (46) comprend en outre un deuxième élément de guidage radial supplémentaire (61) présentant une surface de contact supplémentaire (62) et la roue dentée orbitale (47) comprend un deuxième contre-élément de guidage supplémentaire (71).

## Description

### Domaine de la divulgation

La présente divulgation est relative à un mécanisme pour siège de véhicule, notamment de siège de véhicule automobile. La présente divulgation se rapporte également un siège de véhicule automobile comprenant le mécanisme de réglage.

### Etat de la technique

Dans le domaine des sièges de véhicule, il est utile pour régler le siège d'utiliser un réducteur, afin de réduire l'effort à effectuer par un utilisateur ou de réduire la vitesse de réglage et la puissance nécessaire lorsqu'un actionneur est utilisé.

A cet effet, il est connu, notamment du document US 2020/101884 A1 un mécanisme de réglage pour siège de véhicule comportant :
un boîtier comprenant un premier contre élément de guidage,
un dispositif excentrique monté rotatif autour d'un axe principal de rotation dans le boitier, l'axe principal de rotation s'étendant suivant une direction axiale, le dispositif excentrique comprend un arbre excentrique,
une roue dentée orbitale montée mobile en rotation autour d'un axe d'excentrique sur l'arbre excentrique, l'axe d'excentrique s'étendant suivant la direction axiale et étant distant de l'axe principal de rotation d'une distance d'excentricité (non nulle), la roue dentée orbitale comprenant deux deuxièmes contre-éléments de guidage, les deux deuxièmes contre-éléments de guidage étant diamétralement opposés par rapport à l'axe d'excentrique,
un dispositif de sortie comprenant une couronne dentée qui coopère (engrène) avec la roue dentée orbitale,
un coulisseau comprenant un premier élément de guidage radial et deux deuxièmes éléments de guidage radial, le premier élément de guidage radial coopérant avec le premier contre-élément de guidage pour guider le coulisseau en translation par rapport au boitier suivant une première direction de coulissement, la première direction de coulissement étant perpendiculaire à la direction axiale, les deux deuxièmes éléments de guidage radial étant diamétralement opposés par rapport à l'axe principal de rotation et coopérant avec les deux deuxièmes contre éléments de guidage pour guider la roue dentée orbitale en translation par rapport au coulisseau suivant une deuxième direction de coulissement entre une première position extrême et une deuxième position extrême, la deuxième direction de coulissement étant perpendiculaire à la direction axiale et à la première direction de coulissement.

Un tel mécanisme apporte pleinement satisfaction. Toutefois, la présente divulgation vise à augmenter la résistance du mécanisme en cas de choc, sans augmenter la masse ni réduire la compacité du mécanisme. En effet, la résistance pourrait aisément être augmentée en accroissant la dimension du mécanisme. Inversement, la présente divulgation vise à réduire l'encombrement et la masse du mécanisme sans réduire sa résistance mécanique en cas de choc.

### Exposé de l'invention

Pour remédier aux problèmes précités, conformément à la divulgation, le coulisseau comprend en outre un deuxième élément de guidage radial supplémentaire présentant une surface de contact supplémentaire et la roue dentée orbitale comprend un deuxième contre-élément de guidage supplémentaire, le deuxième élément de guidage radial supplémentaire étant sensiblement au contact du deuxième-contre-élément de guidage supplémentaire dans la première position extrême.

Le deuxième élément de guidage radial supplémentaire et le deuxième contre-élément de guidage supplémentaire créent un affaiblissement mécanique du coulisseau et/ou de la roue dentée orbitale. Mais, une répartition plus uniforme des efforts s'exerçant entre la roue dentée orbitale et le coulisseau peut être obtenu, procurant ainsi une meilleure résistance mécanique du mécanisme de réglage.

De préférence, le mécanisme de réglage présente en outre les caractéristiques suivantes :
- le deuxième élément de guidage radial supplémentaire est décalé angulairement d'un angle de guidage supplémentaire (non nul) autour de l'axe principal de rotation par rapport aux deuxièmes éléments de guidage radial, et
- le deuxième contre-élément de guidage supplémentaire est décalé de l'angle de guidage supplémentaire autour de l'axe d'excentrique par rapport aux deuxièmes contre-éléments de guidage.

Le décalage angulaire procure une meilleure résistance mécanique du mécanisme de réglage à encombrement et masse constante.

L'angle de guidage supplémentaire est de préférence compris entre 75 degrés et 105 degrés, plus préférentiellement entre 85 degrés et 95 degrés.

Dans divers modes de réalisation du mécanisme de réglage selon la divulgation, on peut éventuellement avoir recours en outre à l'une et/ou à l'autre des dispositions suivantes :
- le coulisseau comprend deux deuxièmes éléments de guidage radial supplémentaires, les deux deuxièmes éléments de guidage radial supplémentaires sont diamétralement opposés autour de l'axe de rotation principal, et la roue dentée orbitale comprend deux deuxièmes contre-éléments de guidage supplémentaire, les deux deuxièmes contre-éléments de guidage supplémentaire sont diamétralement opposés autour de l'axe d'excentrique ;
- les deuxièmes contre-éléments de guidage supplémentaire s'écartent du coulisseau entre 1 dixième de millimètre et un millimètre suivant la première direction de coulissement, lorsque la roue dentée orbitale à l'écart de la première position extrême et la deuxième position extrême ;
- la contre surface de contact supplémentaire présente des dents faisant saillie en direction de la surface de contact supplémentaire ;
- les dents forment des saillies comprises entre 0,05 millimètre et 1 millimètre et sont distantes les unes des autres entre 0,5 millimètre et 2 millimètres ;
- le mécanisme de réglage comprend en outre un moteur configuré pour entrainer le dispositif excentrique en rotation autour de l'axe principal de rotation ;
- la surface de contact supplémentaire présente, en section perpendiculaire à la direction axiale, une forme circulaire et la contre surface de contact supplémentaire présente, en section perpendiculaire à la direction axiale, une forme circulaire complémentaire ;
- le deuxième contre-élément de guidage supplémentaire présente perpendiculairement à la direction axiale une section formant au moins un demi-disque avec un méplat ;
- le deuxième contre-élément de guidage supplémentaire présente en section perpendiculaire à la direction axiale une section trapézoïdale.

La présente divulgation concerne en outre un siège de véhicule comprenant le mécanisme de réglage.

Le siège de véhicule comprend de préférence une embase, une assise et le mécanisme de réglage forme un mécanisme de réhausse configuré pour déplacer l'assise par rapport à l'embase.

### Brève description des figures

D'autres caractéristiques et avantages de la présente divulgation apparaîtront dans la description détaillée suivante, se référant aux dessins annexés dans lesquels :
[Fig. 1] est une vue schématique d'un siège de véhicule comprenant un mécanisme de réglage, selon un premier exemple de réalisation,
[Fig. 2] est une vue suivant la flèche repérée II à la [Fig. 1] ;
[Fig. 3] est une vue en perspective du mécanisme de réglage ;
[Fig. 4] est une vue en perspective d'un éclaté du mécanisme de réglage ;
[Fig. 5] est une vue en coupe du mécanisme de réglage selon le plan de coupe repéré V-V à la [Fig. 3] ;
[Fig. 6] une vue en coupe du mécanisme de réglage selon le plan de coupe repéré VI-VI à la [Fig. 5]
[Fig. 7] est une vue suivant la flèche repérée VII à la figure 6 d'un coulisseau et d'une roue dentée orbitale du mécanisme de réglage ;
[Fig. 8] représente conformément à la [Fig. 7] un deuxième exemple de réalisation,
[Fig. 9] représente conformément à la [Fig. 7] un troisième exemple de réalisation,
[Fig. 10] représente conformément à la [Fig. 7] un quatrième exemple de réalisation.

### Description détaillée

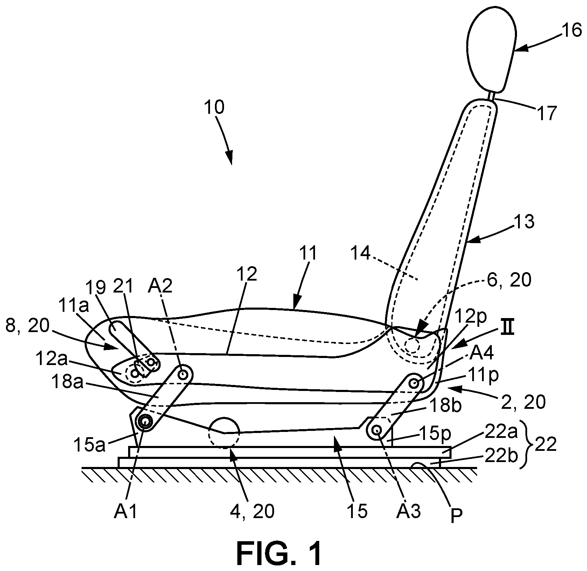

La figure 1 représente schématiquement un siège de véhicule 10 comprenant une assise 11 avec une armature d'assise 12, et un dossier 13 avec une armature de dossier 14, montée sur l'armature d'assise 12. L'armature d'assise 12 est montée sur une embase 15 par l'intermédiaire d'un mécanisme de réglage 20 formant mécanisme de réhausse 2. Un appui-tête 16 est relié à l'armature de dossier 14 par une ou plusieurs douilles ou broches 17 de fixation de l'appui-tête 16. Le mécanisme de réhausse 2 peut comprendre au moins une première bielle 18a et une deuxième 18b. Par exemple, pour chaque première bielle 18a et chaque deuxième bielle 18b, l'extrémité inférieure est reliée à l'embase 15 et l'extrémité supérieure est reliée à l'armature d'assise 12. Plus précisément, dans l'exemple illustré, chaque première bielle 18a est montée pivotante autour d'un premier axe transversal A1 sur une partie antérieure 15a de l'embase 15 à une extrémité et est montée pivotante autour d'un deuxième axe transversal A2- par rapport à une partie antérieure 12a de l'armature d'assise 12 à une extrémité opposée. Chaque deuxième bielle 18b est montée pivotante autour d'un troisième axe transversal A3 sur une partie postérieure 15p de l'embase 15 et est montée pivotante autour d'un quatrième axe transversal A4 à sur une partie postérieure 12p de l'armature d'assise 12 à une extrémité opposée. Dans l'exemple illustré, le premier axe transversal A1, le deuxième axe transversal A2, le troisième axe transversal A3 et le quatrième axe transversal A4 sont parallèles.

L'armature d'assise 12 présente un côté droit et un côté gauche d'architecture similaire. Sur la figure 1, un seul côté est représenté. Sur le côté non représenté, le siège de véhicule 10 comporte de préférence également une première bielle 18a et une deuxième bielle 18b reliant de manière analogue l'armature d'assise 12 et l'embase 15.

L'assise 11 du siège 10 peut aussi, le cas échéant, être équipée d'un nez d'assise mobile, en hauteur et/ou en extension longitudinale. Dans le cas du mouvement d'inclinaison de nez d'assise, une bielle auxiliaire 19 relie l'armature d'assise 12 au nez d'assise, la bielle auxiliaire 19 pouvant être mise en mouvement par un mécanisme de réglage 20 formant mécanisme de réglage auxiliaire 8 via un secteur denté auxiliaire 21.

Par ailleurs, l'embase 15 peut être montée coulissante par rapport au plancher P du véhicule au moyen de glissières longitudinales 22 comprenant un rail fixe 22b fixé au plancher P du véhicule et un rail mobile 22a solidaire de l'embase 15. Le rail mobile 22a peut être déplacé par rapport au rail fixe 22b par l'intermédiaire d'un mécanisme de réglage 20 formant mécanisme de coulissement 4.

Le dossier 13 peut être monté pivotant par rapport à l'assise 11, l'armature de dossier 14 étant reliée à l'armature d'assise 12 par l'intermédiaire d'un mécanisme de réglage 20 formant mécanisme d'articulation 6.

Dans la suite, le mécanisme de réglage 20 sera décrit uniquement en relation avec le mécanisme de réhausse 2, bien qu'il puisse former le mécanisme de coulissement 4, le mécanisme d'articulation 6, le mécanisme de réglage auxiliaire 8 ou un autre mécanisme de réglage analogue.

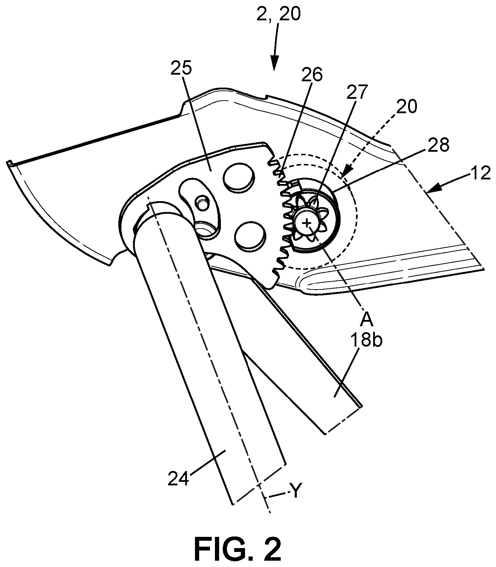

Comme illustré à la figure 2, la deuxième bielle 18b est reliée solidairement à une barre transversale 24 reliant la deuxième bielle 18b représentée à une bielle analogue disposée de l'autre côté de l'assise 11 (non représentée). De plus, la deuxième bielle 18b est reliée solidairement à un flasque de commande 25 qui se présente comme une plaque métallique. Le flasque de commande 25 est reliée directement à la barre transversale 24 et/ou à la deuxième bielle 18b. Le flasque de commande 25 comporte un secteur denté 26 venant en prise directe avec un pignon de sortie 27. Le pignon de sortie 27 est monté mobile en rotation autour d'un axe principal de rotation A s'étendant suivant une direction axiale Y. La barre transversale 24 s'étend également suivant la direction axiale Y.

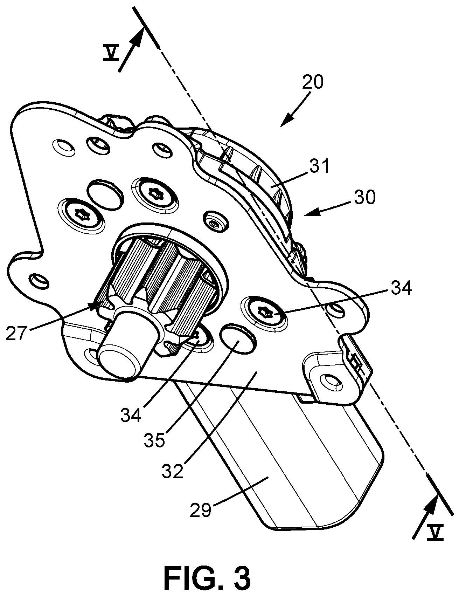

Un premier exemple de mécanisme de réglage 20, illustré plus en détails aux figures 3 à 7 va maintenant être décrit.

Le mécanisme de réglage 20 comprend, tel qu'illustré en particulier à la Figure 3, un moteur 29 et un boîtier 30. Le boitier 30 supporte le moteur 29 et est fixé à l'assise 11 du siège de véhicule 10. Le boitier 30 comporte un carter 31 et un couvercle 32. Le carter 31 et le couvercle 32 sont fixés ensemble, par exemple au moyen de vis de fixation 34. Des éléments de renfort 35 peuvent également être prévus entre le carter 31 et le couvercle 32.

Le carter 31 est en forme de cloche ou cuvette. Le carter 31 comprend des premiers contre-éléments de guidage 52.

Dans l'exemple illustré, le carter 31 est formé en matière plastique. On peut utiliser comme matière plastique de l'ABS, du polypropylène, du polyéthylène, du polyamide etc. Toutefois le carter 31 pourrait aussi être formé en métal, en particulier en alliage d'aluminium, en magnésium ou en tout alliage métallique léger.

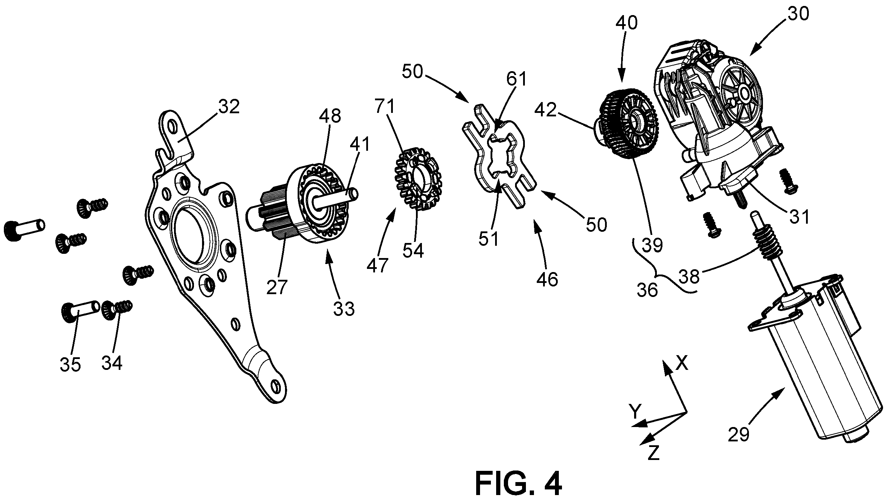

Tel qu'illustré en particulier à la figure 4, le mécanisme de réglage 20 comprend en outre un dispositif excentrique 40, une roue dentée orbitale 47, un coulisseau 46 et un dispositif de sortie 33.

Le moteur 29 comprend un rotor s'étendant perpendiculairement à la direction axiale Y. Le rotor porte en bout une vis à denture hélicoïdale (sans fin) 38. La vis à denture hélicoïdale 38 s'étend à l'intérieur du carter 31.

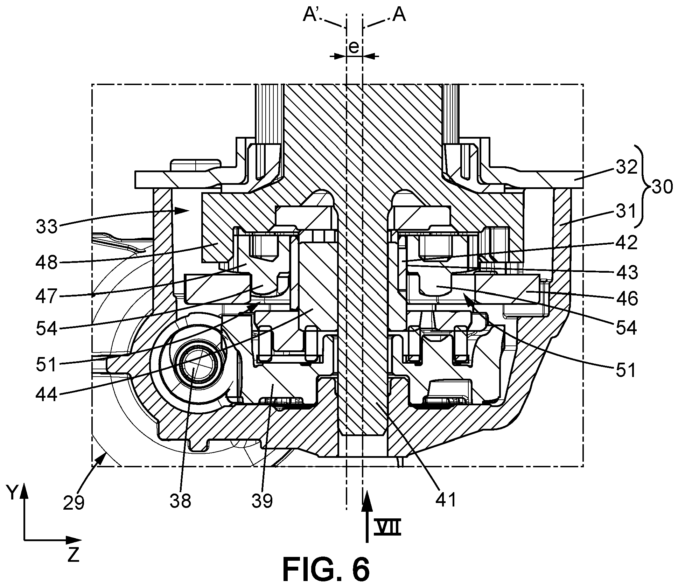

Le dispositif excentrique 40 est monté rotatif autour de l'axe principal de rotation A dans le boitier 30. Le dispositif excentrique 40 comprend essentiellement un élément d'entré et un arbre excentrique 42. Dans l'exemple de réalisation illustré, l'élément d'entrée est formé par une roue d'entrée 39. La roue d'entrée 39 est montée rotative autour de l'axe principale de rotation A dans le boitier 30. Plus précisément, la roue d'entrée 39 est monté rotative sur un arbre principal de rotation 41 porté par le boitier 30. La roue d'entrée 39 coopère avec la vis à denture hélicoïdale 38 pour former un réducteur 36 et tourner à une moindre vitesse que le rotor du moteur 29. L'arbre excentrique 42 comporte une surface extérieure excentrique 43 s'étendant suivant un axe d'excentrique A' et de section circulaire. L'axe d'excentrique A' s'étend suivant la direction axiale X. L'axe d'excentrique A' est donc parallèle à l'axe principal de rotation A. L'axe d'excentrique A' est distant de l'axe principal de rotation A d'une distance d'excentrique e, tel qu'illustré en particulier à la figure 6.

Dans l'exemple de réalisation illustré, l'arbre excentrique 42 est solidarisée en rotation autour de l'axe principal de rotation A avec la roue d'entrée 39 par l'intermédiaire d'une came 44. L'arbre excentrique 42 est tubulaire, la came 44 étant disposée à l'intérieur de l'arbre excentrique 42. Par conséquent, l'arbre d'excentrique A' est entrainé en rotation autour de l'axe principal de rotation A par la roue d'entrée 39.

La roue dentée orbitale 47 est montée mobile en rotation autour de l'axe d'excentrique A' sur la surface extérieure excentrique 43 de l'arbre excentrique 42.

Le dispositif de sortie 33 comprend, outre le pignon de sortie 27, une couronne dentée 48. La couronne dentée 48 entraine en rotation le pignon de sortie 27, le pignon de sortie 27 étant solidaire de la couronne dentée 48. Le dispositif de sortie 33 est guidée en rotation autour de l'axe principal de rotation A par rapport au boitier 30. Dans l'exemple de réalisation illustré, le dispositif de sortie 33 comprend l'arbre principal de rotation 41. Plus précisément, la couronne dentée 48, le pignon de sortie 27 et l'arbre principal de rotation 41 forment un unique élément monobloc. Un pallier peut être disposé entre l'arbre principal de rotation 41 et le couvercle 32 pour guider la rotation de l'arbre principal de rotation 41 et plus généralement le dispositif de sortie 33 par rapport au boitier 30.

La roue dentée orbitale 47 est extérieurement dentée et la couronne dentée 48 est intérieurement dentée, de sorte que la roue dentée orbitale 47 est reçue dans la couronne dentée 48. La roue dentée orbitale 47 présente un diamètre et un nombre de dents inférieurs à ceux de la couronne dentée 48, afin de s'engager dans cette dernière en créant un rapport de réduction.

La roue d'entrée orbitale 47 comprend des deuxième contre-éléments de guidage 54 et des deuxièmes éléments de guidage radial supplémentaire 71, afin de bloquer la roue orbitale 47 en rotation par rapport au boitier 50 autour de l'axe d'excentrique A' et permettre uniquement un mouvement de translation circulaire de la roue orbitale 47 autour de l'axe principal de rotation A.

Plus précisément, la roue dentée orbitale 47 comprend un couple deuxièmes contre-éléments de guidage 54. Les deux deuxièmes contre-éléments de guidage 54 étant diamétralement opposés par rapport à l'axe d'excentrique A'.

La roue dentée orbitale 47 comprend un couple de deuxièmes contre-éléments de guidage supplémentaire 71. Les deux deuxièmes contre-éléments de guidage supplémentaire 71 sont diamétralement opposés autour de l'axe d'excentrique A'.

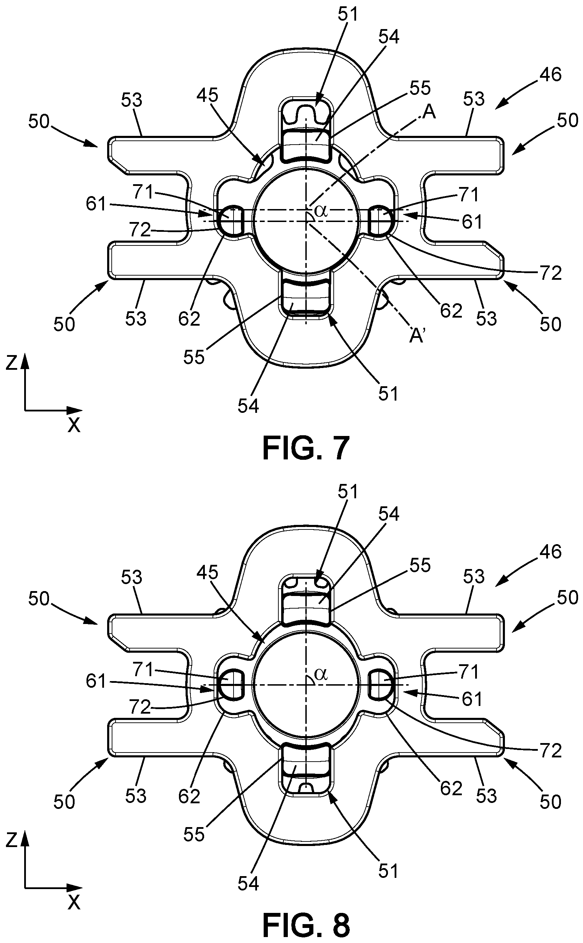

Tel qu'illustré en particulier à la figure 7, les deuxièmes contre-éléments de guidage radial supplémentaire 71 sont décalés autour de l'axe d'excentrique A' par rapport aux deuxièmes contre-éléments de guidage 54 d'un angle de guidage supplémentaire α. L'angle de de guidage supplémentaire est compris entre 75 degrés et 105 degrés, de préférence entre 85 degrés et 95 degrés, plus préférentiellement sensiblement égal à 90 degrés.

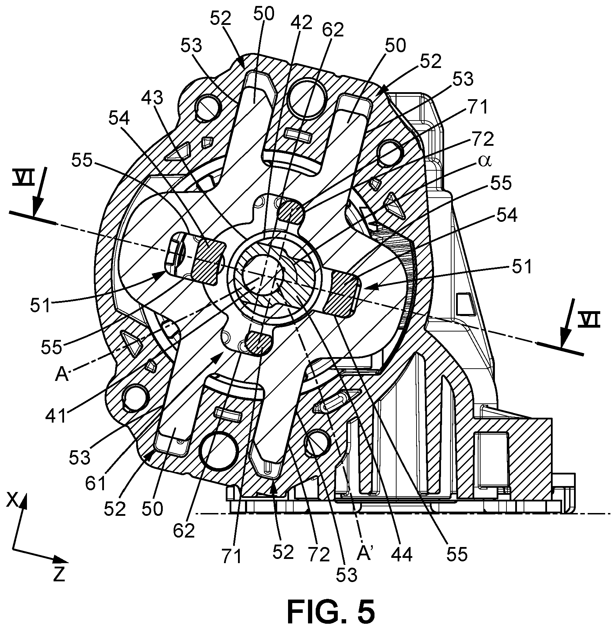

Tel qu'illustré en particulier à la figure 5, le coulisseau 46 comprend un passage principal 45, au moins un premier élément de guidage radial 50, des deuxièmes éléments de guidage radial 51 et des deuxièmes éléments de guidage radial supplémentaires 61.

Le passage principal 45 traverse le coulisseau 46 suivant la direction axiale Y. La came 44 et l'arbre excentrique 42 s'étendent à travers le passage principal 45. De préférence, le passage principal 45 est suffisamment grand pour que l'arbre excentrique 42 ne vienne pas radialement au contact du coulisseau 46. Toutefois, le passage principal 45 est le plus petit possible, afin de réduire le moins possible la plus grande résistance mécanique du coulisseau 46.

Les premiers éléments de guidage radial 50 coopèrent avec les premiers contre-éléments de guidage 52 pour guider le coulisseau 46 en translation par rapport au boitier 30 suivant une première direction de coulissement X. La première direction de coulissement X est perpendiculaire à la direction axiale Y.

Les premiers éléments de guidage radial 50 comportent des premières surfaces de guidage 53 adaptées pour glisser contre les premiers contre-éléments 52 afin de guider le coulisseau 46 en translation suivant la première direction de coulissement X par rapport au boitier 30.

Ainsi, les première surfaces de guidages 53 peuvent par exemple bloquer en translation le coulisseau 46 par rapport au boîtier 30, selon une deuxième direction de coulissement Z, perpendiculaire à la première direction de coulissement X et à la direction axiale Y. Le coulisseau 46 peut également être bloqué en rotation autour de l'axe principal de rotation A par rapport au boîtier 30. Le coulisseau 46 peut en revanche (uniquement) translater par rapport au boîtier 31 suivant la première direction de coulissement X.

Dans l'exemple de réalisation illustré, les premiers éléments de guidage radial 50 sont chacun au nombre de quatre et forment deux paires diamétralement opposées suivant l'axe principal de rotation A. En variante, on pourrait prévoir un nombre différent de premiers éléments de guidage radial 50, de préférence un nombre pair pour former des couples diamétralement opposés suivant l'axe principal de rotation A. Les premiers contre-éléments de guidage 52 sont chacun au nombre de quatre et forment deux paires diamétralement opposé suivant l'axe principal de rotation A. En variante, on pourrait prévoir un nombre différent de premiers contre-éléments de guidage 52, de préférence un nombre pair pour former des couples diamétralement opposés suivant l'axe principal de rotation A.

Les deuxièmes éléments de guidage radial 51 forment un couple de deuxièmes éléments de guidage radial 51 diamétralement opposés par rapport à l'axe principal de rotation A. Les deuxièmes contre-éléments de guidage 54 forment un couple de contre-éléments de guidage 54 diamétralement opposés par rapport à l'axe d'excentrique A' sur la roue dentée orbitale 47. Les deuxièmes éléments de guidage radial 51 coopèrent avec les deux deuxièmes contre-éléments de guidage 54 pour guider la roue dentée orbitale 47 en translation par rapport au coulisseau 46 suivant la deuxième direction de coulissement Z entre une première position extrême (illustrée à la figure 5) et une deuxième position extrême. Ainsi, la roue dentée orbitale 47 peut uniquement translater suivant la deuxième direction de coulissement Z par rapport au coulisseau 46.

Les deuxièmes surfaces de guidage 55 peuvent par exemple bloquer en translation la roue dentée 47 par rapport au coulisseau 46, selon la première direction de coulissement X. La roue dentée orbitale 47 peut également être bloquée en rotation autour de l'axe d'excentrique A' par rapport au coulisseau 46. La roue dentée orbitale 47 peut en revanche (uniquement) translater suivant la deuxième direction de coulissement Z.

Un tour complet de la roue dentée orbitale 47 dans la couronne dentée 48 décale angulairement le pignon de sortie 27 par rapport au boîtier 31 de la différence de nombre de dents entre la roue dentée orbitale 47 et la couronne dentée 48.

Dans le premier exemple de réalisation, chaque premier élément de guidage radial 50 peut être constitué par une extension de section rectangulaire suivant la première direction de coulissement X depuis un corps du coulisseau 46. Les extensions peuvent s'étendre deux à deux de chaque côté du corps du coulisseau 46. Les extensions peuvent ainsi avoir une forme de « U » faisant saillie par rapport au corps du coulisseau 46, suivant la première direction de coulissement X et étant diamétralement opposées. Les flancs des extensions peuvent alors constituer les premières surfaces de guidage 53. Chaque premier contre-élément 52 peut alors constituer une rainure s'étendant dans le carter 31 du boitier 30, suivant la première direction de coulissement X et recevant étroitement les extensions.

Chaque deuxième élément de guidage radial 51 peut être constitué par une ouverture rectiligne pratiquée dans le coulisseau 46, s'étendant suivant la deuxième direction de coulissement Z et dont les flancs constituent les deuxièmes surfaces de guidage 55. Chaque deuxième contre-élément de guidage 54 peut alors comprendre des doigts de section rectangulaire faisant saillie de la roue dentée orbitale 47 suivant la direction axiale Y et adaptés pour être étroitement reçus dans les ouvertures rectilignes. Chaque ouverture rectiligne peut avantageusement communiquer avec le passage principal 45. Dans ce cas, pour chaque couple de deuxièmes éléments de guidage radial 51 dans la première position extrême et dans la deuxième position extrême de translation de la roue orbitale 47 suivant la deuxième direction de coulissement Z par rapport au coulisseau 46, l'un des deuxièmes éléments de guidage radial 51 est dans le passage principal 45, autrement dit la deuxième surface de guidage 55 n'est partiellement plus guidée par les flancs du deuxième élément de guidage radial 51 dans lequel il est reçu.

Les deuxièmes éléments de guidage radial supplémentaires 61 forment un couple de deuxièmes éléments de guidage radial supplémentaires 61 diamétralement opposés par rapport à l'axe principal de rotation A. Les deuxièmes contre-éléments de guidage supplémentaires 71 forment un couple de contre-éléments de guidage 71 diamétralement opposés par rapport à l'axe d'excentrique A' sur la roue dentée orbitale 47. Les deuxièmes éléments de guidage radial supplémentaires 61 présentent chacun une surface de contact supplémentaire 62. Les deuxièmes contre-éléments de guidage supplémentaires 71 présentent chacun une contre-surface de contact supplémentaire 72. Dans chacune des positions extrêmes de translation de la roue dentée orbitale 47 suivant la deuxième direction de coulissement Z, les surfaces de contact supplémentaire 62 viennent au contact des contre-surfaces de contact supplémentaire 72. Ainsi, les contraintes s'appliquant entre la roue dentée orbitale 47 et le coulisseau 46 en cas de choc sur le véhicule ou plus généralement sur le mécanisme de réglage 20 s'appliquent non seulement entre les deuxièmes éléments de guidage radial 51 et les deuxièmes contre-éléments de guidage 54, mais aussi entre les deuxièmes éléments de guidage radial supplémentaire 61 et les deuxièmes contre-éléments de guidage supplémentaire 71.

Les surfaces de contact supplémentaire 72 présente en section perpendiculaire à la direction axiale Y une forme circulaire et les contre-surfaces de contact supplémentaire 62 présente en section perpendiculaire à la direction axiale Y une forme circulaire complémentaire.

Il sera noté que les deuxièmes contre-éléments de guidage supplémentaires 71 sont disposés sur la roue dentée orbitale 47 sensiblement à la même distance (moins de 5 millimètres d'écart, de préférence moins de 3 millimètres d'écart) de l'axe d'excentrique A' que les deuxièmes contre-éléments de guidage 54, de sorte que l'encombrement du mécanisme de réglage n'est pas augmenté et la résistance mécanique du coulisseau 46 au niveau des deuxièmes éléments de guidage radial supplémentaires 61 est augmentée.

Entre la première position extrême (illustrée à la figure 5) et la deuxième position extrême de la roue dentée orbitale 47, les deuxièmes contre-éléments de guidage supplémentaire translatent suivant la deuxième direction de coulissement Z de deux fois distance d'excentrique e.

Chaque deuxième élément de guidage radial supplémentaire 61 peut être constitué par une ouverture supplémentaire pratiquée dans le coulisseau 46, et s'étendant suivant la deuxième direction de coulissement Z. Dans le premier exemple de réalisation, l'ouverture supplémentaire formant le deuxième élément de guidage radial supplémentaire 61 communique avec le passage principal 45.

Par ailleurs, chaque deuxième contre-élément de guidage supplémentaire 71 peut alors comprendre des doigts supplémentaires faisant saillie de la roue dentée orbitale 47 suivant la direction axiale Y. Dans le premier exemple de réalisation, les deuxièmes contre-éléments de guidage radial supplémentaire 71 présentent perpendiculairement à la direction axiale une section formant au moins un demi-disque avec un méplat.

Le deuxième exemple de réalisation illustré à la figure 8 se distingue essentiellement du premier exemple de réalisation illustré aux figures 3 à 7 en ce que les contre-surfaces de contact supplémentaires 72 présentent des dents faisant saillie en direction des surfaces de contact supplémentaire 62.

Les dents forment des saillies comprises entre 0,05 millimètre et 1 millimètre. Les dents sont de préférence distantes les unes des autres entre 0,5 millimètre et 2 millimètres. En outre, les dents forment de préférence des nervures s'étendant suivant la direction axiale Y.

A l'écart de la première position extrême et la deuxième position extrême de translation de la roue orbitale 47 par rapport au coulisseau 46 suivant la deuxième direction de coulissement Z, les deuxièmes contre-éléments de guidage supplémentaire 71 sont de préférence à l'écart du coulisseau 46 entre 1 dixième de millimètre et un millimètre suivant la première direction de coulissement X. Ainsi, il est évité un frottement entre les deuxièmes éléments de guidage radial supplémentaire 61 et les deuxièmes contre-éléments de guidage supplémentaire 71.

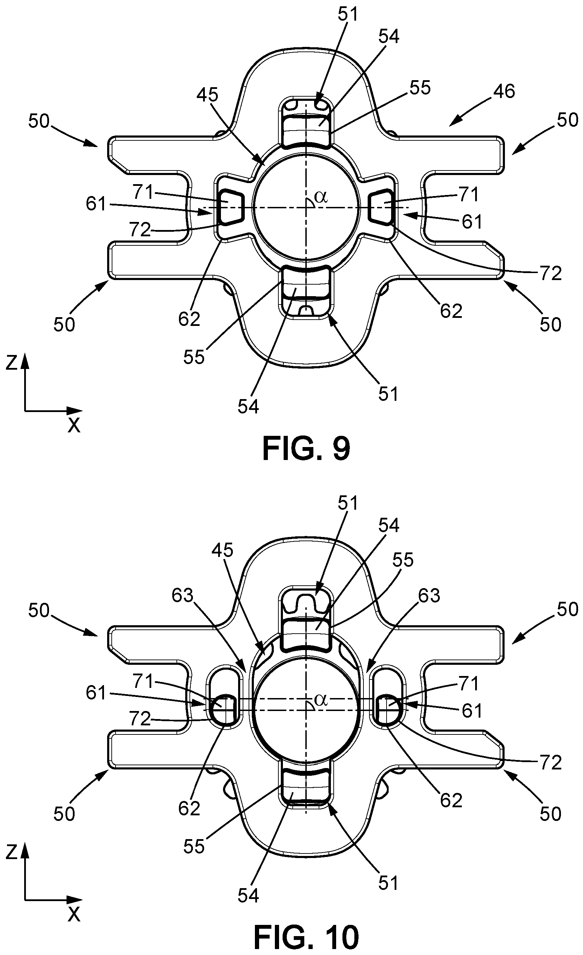

Le troisième exemple de réalisation illustré à la figure 9 se distingue essentiellement du premier exemple de réalisation illustré aux figures 3 à 7 en ce que les deuxièmes contre-éléments de guidage radial supplémentaire présentent en section perpendiculaire à la direction axiale Y une section trapézoïdale.

Le quatrième exemple de réalisation illustré à la figure 10 se distinguent essentiellement du premier exemple de réalisation illustré aux figures 3 à 7 en ce que chaque deuxième élément de guidage radial supplémentaire 61 est constitué par une ouverture supplémentaire pratiquée dans le coulisseau 46 qui est séparée du passage principal par un pontet 63.

## Revendications

1. Mécanisme de réglage (20) pour siège (1) de véhicule comportant :
un boîtier (30) comprenant un premier contre-élément de guidage (52),
un dispositif excentrique (40) monté rotatif autour d'un axe principal de rotation (A) dans le boitier (30), l'axe principal de rotation (A) s'étendant suivant une direction axiale (Y), le dispositif excentrique (40) comprend un arbre excentrique (42),
une roue dentée orbitale (47) montée mobile en rotation autour d'un axe d'excentrique (A') sur l'arbre excentrique (42), l'axe d'excentrique (A') s'étendant suivant la direction axiale (Y) et étant distant de l'axe principal de rotation (A) d'une distance d'excentricité (e), la roue dentée orbitale (47) comprenant deux deuxièmes contre-éléments de guidage (54), les deux deuxièmes contre-éléments de guidage (54) étant diamétralement opposés par rapport à l'axe d'excentrique (A'),
un dispositif de sortie (33) comprenant une couronne dentée (48) qui coopère avec la roue dentée orbitale (47),
un coulisseau (46) comprenant un premier élément de guidage radial (50) et deux deuxièmes éléments de guidage radial (51), le premier élément de guidage radial (50) coopérant avec le premier contre-élément de guidage (52) pour guider le coulisseau (46) en translation par rapport au boitier (30) suivant une première direction de coulissement (X), la première direction de coulissement (X) étant perpendiculaire à la direction axiale (Y), les deux deuxièmes éléments de guidage radial (51) étant diamétralement opposés par rapport à l'axe principal de rotation (A) et coopérant avec les deux deuxièmes contre-éléments de guidage (54) pour guider la roue dentée orbitale (47) en translation par rapport au coulisseau (46) suivant une deuxième direction de coulissement (Z) entre une première position extrême et une deuxième position extrême, la deuxième direction de coulissement (Z) étant perpendiculaire à la direction axiale (X) et à la première direction de coulissement (Y),
**caractérisé en ce que** le coulisseau (46) comprend en outre un deuxième élément de guidage radial supplémentaire (61) présentant une surface de contact supplémentaire (62) et la roue dentée orbitale (47) comprend un deuxième contre-élément de guidage supplémentaire (71) présentant une contre-surface de contact supplémentaire (72), le deuxième élément de guidage radial supplémentaire (61) étant sensiblement au contact du deuxième-contre-élément de guidage supplémentaire (71) dans la première position extrême.

2. Mécanisme de réglage selon la revendication 1 dans lequel :
- le deuxième élément de guidage radial supplémentaire (61) est décalé angulairement d'un angle de guidage supplémentaire (α) autour de l'axe principal de rotation (A) par rapport aux deuxièmes éléments de guidage radial (51), et
- le deuxième contre-élément de guidage supplémentaire (71) est décalé de l'angle de guidage supplémentaire (α) autour de l'axe d'excentrique (A') par rapport aux deuxièmes contre-éléments de guidage (54).

3. Mécanisme de réglage selon la revendication 2 dans lequel l'angle de guidage supplémentaire (α) est compris entre 75 degrés et 105 degrés.

4. Mécanisme de réglage selon l'une quelconque des revendications précédentes dans lequel :
- le coulisseau (46) comprend deux deuxièmes éléments de guidage radial supplémentaires (61), les deux deuxièmes éléments de guidage radial supplémentaires (61) sont diamétralement opposés autour de l'axe de rotation principal (A), et
- la roue dentée orbitale (47) comprend deux deuxièmes contre-éléments de guidage supplémentaire (71), les deux deuxièmes contre-éléments de guidage supplémentaire (71) sont diamétralement opposés autour de l'axe d'excentrique (A').

5. Mécanisme de réglage selon l'une quelconque des revendications précédentes dans lequel les deuxièmes contre-éléments de guidage supplémentaire (71) s'écartent du coulisseau (46) entre 1 dixième de millimètre et un millimètre suivant la première direction de coulissement (X), lorsque la roue dentée orbitale (47) est à l'écart de la première position extrême et la deuxième position extrême.

6. Mécanisme de réglage selon l'une quelconque des revendications précédentes dans lequel la contre-surface de contact supplémentaire (72) présente des dents faisant saillie en direction de la surface de contact supplémentaire (62).

7. Mécanisme de réglage selon la revendication précédente dans lequel les dents forment des saillies comprises entre 0,05 millimètre et 1 millimètre et sont distantes les unes des autres entre 0,5 millimètre et 2 millimètres.

8. Mécanisme de réglage selon l'une quelconque des revendications précédentes dans lequel le mécanisme de réglage comprend un moteur (29) configuré pour entrainer le dispositif excentrique (40) en rotation autour de l'axe principal de rotation (A).

9. Mécanisme de réglage selon l'une quelconque des revendications précédentes dans lequel la surface de contact supplémentaire (62) présente, en section perpendiculaire à la direction axiale (X), une forme circulaire et la contre surface de contact supplémentaire (72) présente, en section perpendiculaire à la direction axiale (X), une forme circulaire complémentaire.

10. Siège de véhicule comprenant un mécanisme de réglage selon l'une quelconque des revendications précédentes.
